# EUROPEAN PATENT APPLICATION

(11) **EP 2 466 070 A2**
(43) Date of publication of application: **20.06.2012**
(21) Application number: 11192926.1
(22) Date of filing: 12.12.2011
(51) Int. Cl.: F01D 5/00, B23P 6/04, B23K 26/34

(54) **Method of repairing a transition piece of a gas turbine engine**

(30) Priority: 20.12.2010 US 973170
(71) Applicant: General Electric Company, Schenectady, New York 12345 (US)
(72) Inventor: Kottilingam, Srikanth Chandrudu, Greenville, SC South Carolina 29615 (US); Murphy, Gene Arthur, Schenectady, NY New York 12345 (US); Berkebile, Matthew Paul, Greenville, SC South Carolina 29615 (US)
(74) Representative: Cleary, Fidelma

(57) **Abstract**

A method of weld repairing an air-cooled aft frame (26) of a transition piece (18) of a gas turbine engine (10). The transition piece (18) has an interior surface coated with a ceramic coating. The aft frame (26) has a surface (28) with cooling holes therein and from which cracks have propagated. The method includes removing the transition piece (18) from the engine (10) and, without removing the ceramic coating or the aft frame (26) from the transition piece (18), weld repairing the cracks by performing a laser beam welding technique that deposits a filler material on the surface (28) but does not close the cooling holes in the surface (28). The surface (28) of the aft frame (26) can be machined to remove excess filler material prior to re-installing the transition piece (18) in a gas turbine engine (10).

## Description

### BACKGROUND OF THE INVENTION

The present invention generally relates to welding methods for repairing components formed of high temperature alloys. More particularly, this invention is directed to a method for weld repairing an air-cooled transition piece of an industrial gas turbine engine, by which filling of cooling holes and spallation of a coating on the transition piece can be avoided.

Superalloys are widely used to form components of turbomachinery, such as turbine components of industrial and aircraft gas turbine engines. Notable examples include turbine buckets (blades), nozzles (vanes), and combustor components such as liners, heatshields and transition pieces. Superalloy components are often formed by casting, and for some applications are preferably or necessarily fabricated by welding as a result of their complexity. Welding is also widely used as a method for repairing cracks and other surface discontinuities in superalloy components caused by thermal cycling or foreign object damage. Welding of superalloy materials is typically performed with gas tungsten arc welding (GTAW) techniques. A filler is typically used in GTAW repairs, with the choice of filler material typically being a ductile filler or a filler whose chemistry roughly matches the base metal.

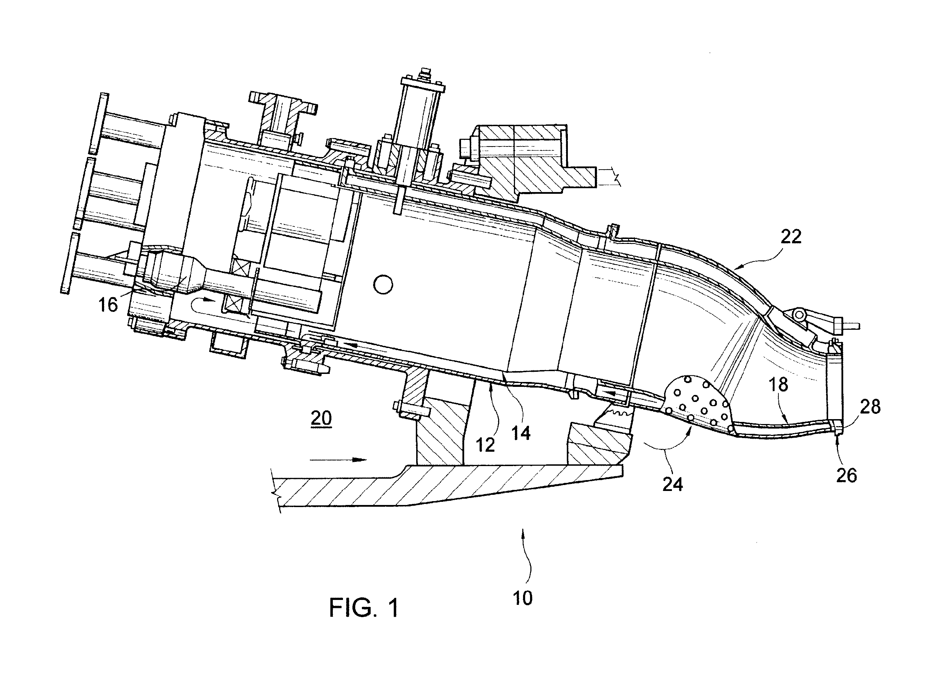

FIG. 1 schematically represents a cross-sectional view of a single annular combustor assembly of an industrial gas turbine engine 10. The combustor assembly is shown having a can-annular combustor 12, which is one of multiple combustors located about the periphery of the turbine engine 10. The combustor 12 has a can-type liner 14 whose interior defines a combustion chamber of the turbine 10. Multiple fuel nozzle assemblies 16 are located at the head end of the liner 14, while the aft end of the liner 14 is coupled to a transition piece 18. Hot combustion gases from the combustor 12 are conducted to the turbine section (not shown) of the engine through corresponding transition pieces 18. The combustors 12 and transition pieces 18 are disposed in a plenum 20 through which bleed air flows from the compressor section (not shown) of the engine 10. An impingement jacket (sleeve) 22 is represented as surrounding the transition piece 18, and bleed air 24 within the plenum 20 flows through the jacket 22 to impingement cool the outer surface of the transition piece 18. The transition piece 18 is equipped with a flange or frame 26 at its aft end, by which the transition piece 18 is connected to the turbine section. The aft frame 26 may also be cooled with bleed air, for example, by controlled bleed air leakage through a seal between mating seal lands of the frame 26 and turbine section, and/or cooling holes (not shown) that define openings at the seal land 28 of the frame 26 to allow bleed air to flow between the jacket 22 and transition piece 18 and then proceed through the frame 26 into a first stage nozzle section within the turbine section of the engine. The frame 26 may be fabricated as a separate piece, and then subsequently welded to the aft end of the transition piece 18.

The combustor liners 14, transition pieces 18 and other hot section components of gas turbine engines are often protected by a thermal barrier coating (TBC), which reduces the temperature of the underlying component substrate and thereby prolongs the service life of the component. Ceramic materials and particularly yttria-stabilized zirconia (YSZ) are widely used as TBC materials because of their high temperature capability, low thermal conductivity, and relative ease of deposition by plasma spraying, flame spraying and physical vapor deposition (PVD) techniques. TBCs are typically applied to the interior surface of the transition pieces 18 so that, in combination with the backside cooling effect provided by the impingement jacket 22, the temperature of the transition piece 18 can be maintained at a temperature below its melting temperature.

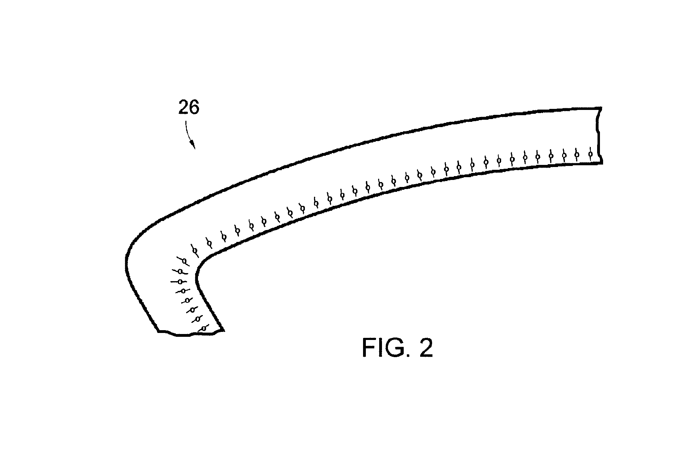

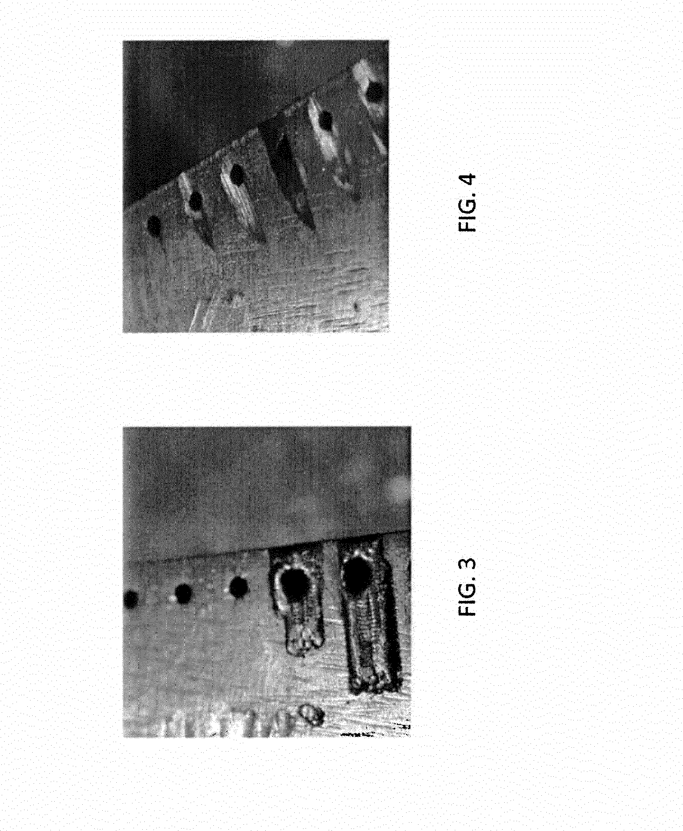

The aft frame 26 is subject to damage resulting from the combination of high temperatures and stresses that can lead to distortion and fatigue. Because the cooling holes act as stress concentrators, the material of the frame 26 surrounding the holes can be particularly susceptible to cracking due to thermo-mechanical fatigue (TMF). Close spacing between holes and small diameters of the holes (typically about 0.020 to about 0.080 inch (about 0.5 to about 2.0 mm)) tend to aggravate the cracking tendency. Steep temperature gradients are another factor that promotes cracking. The result is that multiple cracks may propagate from individual cooling holes, as seen in FIGS. 2 and 3, which show a transition piece that has seen service in an industrial gas turbine engine.

In addition to removal of the transition piece 18 from the engine, very high heat inputs associated with traditional weld repair methods using GTAW have required disassembly of the impingement jacket 22 from the transition piece 18 and stripping of the TBC on the interior surface of the transition piece 18 prior to attempting a repair. Removal of the TBC is performed because high heat inputs of traditional weld repair techniques lead to spallation of the TBC and/or mixing of the TBC material into the weld pool, resulting in weld cracking. Subsequent re-application of the TBC after the weld repair requires a diffusion heat treatment that can distort the jacket 22 and its welds if the jacket 22 were to remain attached to the transition piece 18. Following weld repair, the cooling holes must be re-drilled, an arduous and challenging task due to distortion of the transition piece 18 and its frame 26 during service. Following re-drilling of the cooling holes, the TBC is reapplied and the transition piece 18 undergoes a heat treatment to relieve stresses induced by the welding operation prior to reassembly with the impingement jacket 22. An alternative repair method is to cut the entire aft frame 26 from the transition piece 18 and replace it with a new frame, avoiding the need to repair the cooling holes. However, this approach still requires removal of the impingement jacket 22 and stripping of the TBC prior to the weld operation, and then re-application of the TBC, heat treatment of the transition piece 18 and re-attachment of the impingement jacket 22. Consequently, both processes are costly and time consuming.

In view of the above, it would be desirable to further reduce the time and number of steps required to repair the aft frame of a transition piece.

### BRIEF DESCRIPTION OF THE INVENTION

The present invention resides in a method for weld repairing an air-cooled aft frame of a transition piece of an industrial gas turbine engine, by which filling of cooling holes and spallation of a TBC on the transition piece can be substantially avoided.

The transition piece has an exterior surface, an interior surface coated with a ceramic coating, and an aft frame adapted for attachment to a turbine section of the gas turbine engine. The aft frame has a surface with cooling holes therein and from which cracks have propagated. The method includes removing the transition piece from the gas turbine engine and, without removing the ceramic coating or the aft frame from the transition piece, weld repairing the cracks in the aft frame by performing a laser beam welding technique on the surface of the aft frame. The laser beam welding technique deposits a filler material on the surface but does not close the cooling holes in the surface or melt or spall the ceramic coating. The surface of the aft frame is then machined to remove excess filler material, after which the transition piece can be reinstalled in a gas turbine engine.

The invention also resides in a transition piece repaired by a process comprising the steps described above.

A technical effect of the invention is the ability to weld repair a transition piece without depositing excess filler material that would require re-drilling the cooling holes. Furthermore, the low heat input of the welding technique is capable of eliminating the need to strip a coating within the transition piece prior to the weld repair, and then heat treat the transition piece following the weld repair.

Other aspects and advantages of this invention will be better appreciated from the following detailed description.

### BRIEF DESCRIPTION OF THE DRAWINGS

Embodiments of the invention will be described, by way of example only, with reference to the accompanying drawings in which:
FIG. 1 is a partial cross-sectional view through a single annular combustor assembly of an industrial gas turbine engine.
FIG. 2 schematically represents a portion of an aft frame of a transition piece, and cracks that have developed in a seal land of the aft frame that contains cooling holes.
FIG. 3 is a scanned image showing the result of weld repairing an aft frame of the type represented in FIGS. 1 and 2 using a welding process in accordance with the present invention, and FIG. 4 is a scanned image showing the result of removing excess weld material from the weld repair of FIG. 3.

### DETAILED DESCRIPTION OF THE INVENTION

The present invention will be described with reference to the transition piece 18 of the industrial gas turbine 10 discussed above in reference to FIG. 1. As such, an exemplary transition piece 18 has an exterior surface surrounded by an impingement jacket 22 that is attached to the transition piece 18, an interior surface coated with a TBC or other coating system suitable for thermally insulating the interior surfaces of the transition piece 18, and an air-cooled aft frame 26 adapted to attach the transition piece 18 to the first stage of a turbine section of a gas turbine engine. Furthermore, transition pieces of interest to the invention may be formed of a variety of materials, particular examples of which include nickel-based alloys such as Nimonic C263, Hastelloy X, Inconel 617 and Udimet 500. Finally, the invention is directed to performing a weld repair of cracks that have propagated from cooling holes in a seal land 28 of the aft frame 26, for example, as schematically represented in FIG. 2. Typical configurations for the cooling holes include center-to-center spacings of about 1.25 to about 15 millimeters and diameters of about 0.020 to about 0.080 inch (about 0.5 to about 2.0 mm). However, it should be understood that the invention is not limited to transition pieces having the specific configuration shown in FIGS. 1 through 3, but instead is applicable to other transition pieces adapted for use in a variety of combustor configurations.

To avoid the above-noted shortcomings of GTAW and other high heat input welding processes that can lead to melting or spallation of the TBC and closing of the cooling holes, the present invention uses a laser beam welding (LBW) technique. When operated over a narrow range of welding conditions, laser beam welding is a low heat input welding process that is capable of producing crack-free weld joints in a wide variety of materials, including but not limited to alloys used in turbomachinery. An advantage of laser beam welding processes is that the high energy density of a laser beam is able to produce deep, narrow welds. Additional advantages associated with laser beam welding include the ability to be performed without a vacuum chamber or radiation shield, which are usually required for electron beam welding, another known low heat input welding process.

Preferred lasers for use with this invention are believed to include various solid-state YAG lasers. A nonlimiting example of a suitable laser beam welder has a mean power capability of about 200 watts and a peak power capability of about nine kilowatts. Suitable operating parameters for the laser bean welding process include a power level of about 30 to 70% of peak power, for example, about 2.7 to about 6.3 kilowatts, and a laser spot diameter of about 0.2 to about 1.6 millimeters, more preferably about 0.35 to about 0.75 millimeters. Another operating parameter is to use a pulsed mode of operation, for example, a pulse width of about two to fifteen milliseconds and a pulse frequency of about one to about twelve hertz, though it is foreseeable that a continuous operating mode could be used. Other operating parameters, such as travel speed, can be ascertained without undue experimentation. Control of the laser beam can be achieved with any suitable robotic machinery. The laser beam welding process can be performed in any suitable atmosphere, for example, an inert shielding gas (for example, argon or helium), active shielding gas, or a combination thereof to form a mixed shielding gas. Consistent with laser beam welding processes and equipment known in the art, the laser beam welding process does not need to be performed in a vacuum or inert atmosphere.

Though laser beam welding processes are often performed autogenously (no additional filler metal added), a filler material is preferably used to perform a weld repair on the seal land of the aft frame in order to maintain the surface conditions of the seal land. Simultaneously, the amount of filler material deposited must be controlled to avoid the deposition of filler material in the cooling holes located in the seal land. Suitable filler materials will depend on the particular composition of the aft frame, though notable examples include commercially available alloys such as Nimonic C263 (a precipitation hardenable nickel-chromium-cobalt alloy with an addition of molybdenum for solid-solution strengthening), Haynes 230 (a solid solution-strengthened nickel-base superalloy), IN625 (a solid solution-strengthened nickel-base superalloy), IN617 (a solid solution-strengthened nickel-base superalloy), Hastelloy W (a nickel-molybdenum alloy containing chromium and iron). During welding, the seal land and particularly the material on either side of a crack is heated with a laser beam, though not to the extent that a portion of the metal is vaporized to create a cavity ("keyhole") that would require filling. Instead, the laser beam serves to melt the material on either side of a crack, as well as the filler material, which fuse to form a weldment. Following the laser beam welding technique, it may be desirable in some cases to heat treat the weld-repaired transition piece 18.

In an investigation leading to the invention, a transition piece was removed from service in an industrial gas turbine engine, and discovered to have cracks in its aft frame emanating from cooling holes in the seal land of the aft frame. The transition piece and the aft frame were formed of Nimonic C263, which has a composition of, by weight, 19-21% chromium, 19-21% cobalt, 5.6-6.1% molybdenum, 1.9-2.4% titanium, 0-0.6% aluminum (2.4-2.8% Al+Ti), 0.04-0.08% carbon, 0-0.6% manganese, 0-0.2% copper, 0-0.005% boron, 0-0.7% iron, 0-0.4% silicon, the balance nickel and incidental impurities. The interior surface of the transition piece was protected by a ceramic thermal barrier coating (TBC). The cooling holes had diameters of about two millimeters, and were spaced about two millimeters apart. The cracks extended completely through the section thickness of the aft frame, and were blended out before individually undergoing pulsed laser beam welding using the following parameters: a power level of about 55% of peak power (about 5 kilowatts), a laser spot diameter of about 0.35 millimeter, a pulse width of about 9 milliseconds, a pulse frequency of about 4 hertz, and a travel speed of about 0.5 millimeter per second. The filler material was Haynes 230, having a nominal composition of, by weight, about 22.0% chromium, 2.0% molybdenum, 14.0% tungsten 0.3% aluminum, 0.5% manganese, 0.4% silicon, 0.10% carbon, 0.02% lanthanum, the balance (about 57%) nickel and incidental impurities. The filler feed rate of about 0.5 millimeter per second.

Two of the resulting weldments are seen in FIG. 3, which evidences that a slight build-up of weldment occurred without any significant encroachment into the cooling holes. Furthermore, no melting or spalling of the TBC was observed. Additional cracks were welded in the aft frame in the same manner, after which the seal land was machined by hand blending using an abrasive wheel or belt to remove excess weldment projecting above the surrounding surface of the seal land. The results of this blending operation can be seen in FIG. 4. From these results, it was concluded that the pulsed laser beam welding technique successfully repaired the cracks without depositing excess filler material that would require re-drilling the cooling holes. Furthermore, it was concluded that, because the low heat input of the welding technique did not melt or spall the TBC, stripping of the TBC prior to the weld repair was unnecessary. It was also concluded that the low heat input of the welding technique would eliminate the need to disassemble the impingement jacket from the transition piece, and eliminate the need to heat treat the transition piece following the weld repair. As such, the weld repair eliminates the need to reapply the TBC and reattach the impingement jacket. Consequently, the laser beam welding process performed on the transition piece was concluded to be less costly and time consuming than prior methods of repairing aft frames of transition pieces.

While the invention has been described in terms of a particular embodiment, it is apparent that other forms could be adopted by one skilled in the art. Accordingly, the scope of the invention is to be limited only by the following claims.

## Claims

1. A method of weld repairing a transition piece (18) of a gas turbine engine (10), the transition piece (18) having an exterior surface, an interior surface coated with a ceramic coating, and an air-cooled aft frame (26) adapted for attachment to a turbine section of the gas turbine engine (10), the aft frame (26) having a surface (28) with cooling holes therein and from which cracks have propagated, the method comprising:
removing the transition piece (18) from the gas turbine engine (10);
without removing the ceramic coating or the aft frame (26) from the transition piece (18), weld repairing the cracks in the aft frame (26) by performing a laser beam welding technique on the surface (28) of the aft frame (26), wherein the laser beam welding technique deposits a filler material on the surface (28) but does not close the cooling holes in the surface (28) or melt or spall the ceramic coating;
machining the surface (28) of the aft frame (26) to remove excess filler material; and
re-installing the transition piece (18) in a gas turbine engine (10).

2. The method according to claim 1, **characterized in that** operating parameters for the laser bean welding technique comprise a power level of about 2.7 to about 6.3 kilowatts, and a laser spot diameter of about 0.2 to about 1.6 millimeters.

3. The method according to claim 1, wherein the laser beam welding technique is a pulsed laser beam welding technique.

4. The method according to claim 3, **characterized in that** the pulsed laser beam welding technique utilizes a pulsed mode of operation comprising a pulse width of about two to fifteen milliseconds and a pulse frequency of about one to about twelve hertz.

5. The method according to any one of claims 1 to 4, **characterized in that** the transition piece (18) is formed of a nickel-based alloy.

6. The method according to claim 5, wherein the nickel-based alloy is a precipitation hardenable nickel-chromium-cobalt alloy with an addition of molybdenum for solid-solution strengthening.

7. The method according to any preceding claim, wherein the filler material is formed of a nickel-based alloy.

8. The method according to claim 7, wherein the nickel-based alloy is a solid solution-strengthened nickel-base superalloy.

9. The method according to any one of claims 1 to 8, **characterized in that** the surface (28) of the aft frame (26) containing the cooling holes is a seal land (28) of the aft frame (26).

10. The method according to any one of claims 1 to 9, **characterized in that** the cooling holes are spaced about 1.25 to about 15 millimeters apart and are about 0.5 to about 2.0 millimeters in diameter.

11. The method according to any one of claims 1 to 10, **characterized in that** the transition piece (18) is reinstalled in the gas turbine engine (10) without heat treating the transition piece (18) and without reapplying the ceramic coating following the weld repairing step.

12. The method according to any one of claims 1 to 11, **characterized in that** the exterior surface of the transition piece (18) is surrounded by an impingement jacket (22) attached to the transition piece (18), and the weld repairing step is performed without removing the impingement jacket (22) from the transition piece (18).

13. The method according to any one of claims 1 to 12, **characterized in that** the gas turbine engine (10) is an industrial gas turbine engine (10).

14. The transition piece (18) repaired by the method of any one of claims 1 to 13.
